# EUROPEAN PATENT SPECIFICATION

(11) **EP 1 759 968 B1**
(45) Date of publication and mention of the grant of the patent: **09.01.2008**
(21) Application number: 05019127.9
(22) Date of filing: 02.09.2005
(51) Int. Cl.: B62J 9/00, B62J 1/00

(54) **Saddle for a scooter-type motorcycle**
Sitzbank für ein Roller-Typmotorrad
Selle d'une motocyclette du type scooter

(43) Date of publication of application: 07.03.2007
(73) Proprietor: Kwang Yang Motor Co., Ltd., Kaohsiung (TW)
(72) Inventor: Yu, Cheng-Wen, Tso Ying District, Kaohsiung (TW); Huang, Kuo-Feng, Sanmin District,Kaohsiung (TW)
(74) Representative: GROSSE BOCKHORNI SCHUMACHER

(56) References cited:
- EP-A- 1 413 504
- DE-U1- 8 913 080
- FR-A- 1 248 870
- US-B1- 6 739 655

## Description

The invention relates to a saddle for a scooter-type motorcycle, more particularly to a motorcycle saddle with a front accommodation chamber.

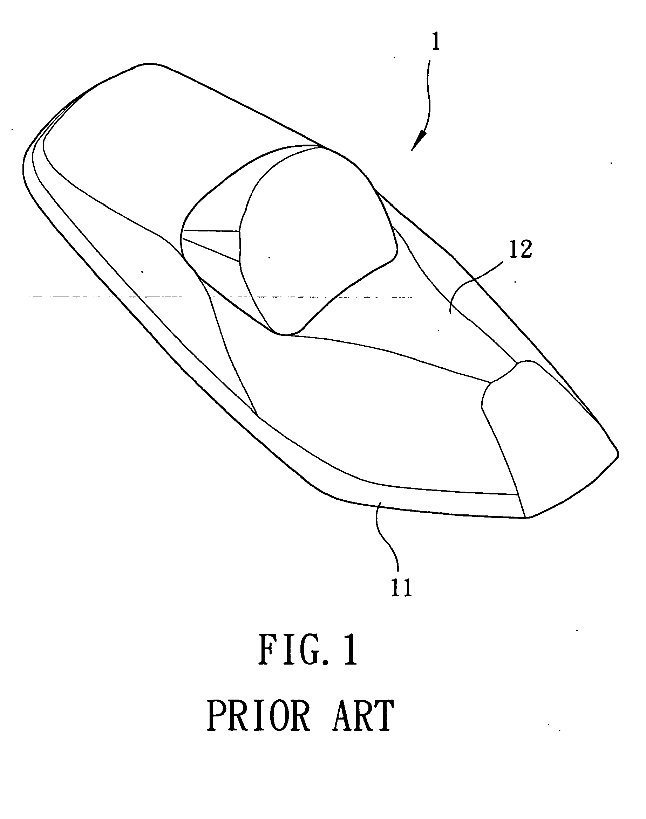

Referring to Figure 1, a conventional motorcycle saddle 1 is shown to include a saddle base 11 and a seat cushion 12 mounted on top of the saddle base 11. The seat cushion 12 includes a foamed plastic body and a surface plastic layer covering the foamed plastic body.

Closest prior art document US 6 739 655 shows a recreational vehicle with a seat that contains a pocket storage compartment.

A scooter-type motorcycle is generally provided with a storage space under the motorcycle saddle to facilitate storage of relatively large articles, such as a helmet. A glove compartment is also provided in a front fork assembly of the motorcycle for storage of relatively small articles. However, the under-seat storage space and the glove compartment are often locked and unlocked with the use of the ignition key of the motorcycle. That means, if the rider wishes to access the under-seat storage space or the glove compartment when the engine is on, he/she needs to stop the engine in order to remove the ignition key. The rider also needs to dismount the motorcycle if he/she wants to access the under-seat storage space. This is especially inconvenient when the rider just wants to put or take out a small item, such as a cigarette lighter, tissue paper, etc.

Therefore, an obj ect of the present invention as disclosed by the features of independent claim 1, is to provide a saddle for a scooter-type motorcycle, which has a front accommodation chamber for convenient storage of small items therein, and which will not undesirably open to affect normal use.

According to this invention, a saddle for a scooter-type motorcycle which has front and rear wheels opposite to each other in a longitudinal direction, and a footboard interposed therebetween, comprises a saddle shell, a receptacle, left and right mounts, a lid member, a pivot shaft, and a leaf spring. The saddle shell includes a seat mounting portion adapted to be spacedly disposed from the footboard in an upright direction. The receptacle includes a front wall which has an end portion secured to the seat mounting portion, which extends towards the footboard to terminate at a lower mount region, and which has an access opening extending between the seat mounting portion and the lower mount region, and a rear wall which is spaced apart from the front wall, and which is exposed to the access opening. The rear wall extends in the upright direction and toward the footboard, and terminates at a lower joining edge. The access opening extends downwardly to terminate at a bottom wall that is integrally formed with the lower joining edge so as to define an accommodation chamber in cooperation with the rear wall. The left and right mounts are disposed on the lower mount region, and are spaced apart from each other in a transverse direction relative to both the longitudinal and upright directions. The lid member includes pivoted and anchoring regions opposite to each other. The pivot shaft is disposed on the pivoted region, and has left and right journal ends that are journalled respectively on the left and right mounts about a pivot axis such that the lid member is turnable about the pivot axis between an opened position where the anchoring region is remote from the rear wall to expose the access opening, and a closedpositionwhere the anchoring region is closer to the rear wall to cover the access opening. The leaf spring has a connecting end secured to the lower mount region, and a tongue end which is configured such that the tongue end is kept in frictional engagement with the pivot shaft when the lid member is turned about the pivot axis between the opened and closed positions.

Other features and advantages of the present invention will become apparent in the following detailed description of the preferred embodiments with reference to the accompanying drawings, of which:
Figure 1 is a perspective view of a conventional motorcycle saddle;
Figure 2 is an exploded perspective view of a scooter-type motorcycle incorporating the first preferred embodiment of a saddle according to this invention;
Figure 3 is a perspective view of the first preferred embodiment, showing a lid member in an opened position;
Figure 4 is a fragmentary sectional view of the first preferred embodiment, showing that the lid member is in a closed position and that a latch member engages a lower inner wall edge of a rear wall of a receptacle;
Figure 5 is a fragmentary sectional view of the first preferred embodiment, showing that the lid member in the opened position and that the lid member abuts against a stop member of the receptacle to restrict the turning angle;
Figure 6 is a schematic view showing the motorcycle incorporating the first preferred embodiment in a state of use; and

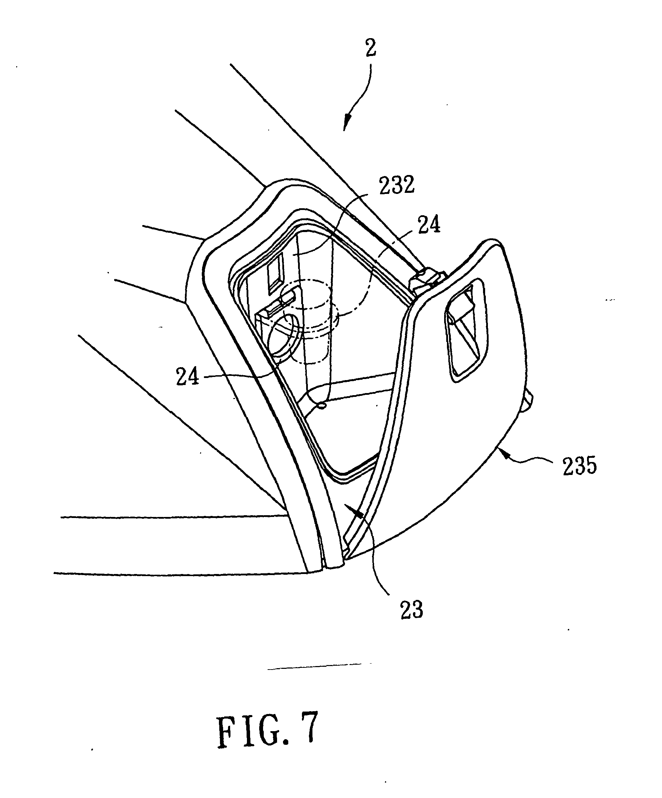

Figure 7 is a fragmentary perspective view of the second preferred embodiment of a saddle according to this invention.

Before the present invention is described in greater detail, it should be noted that like elements are denoted by the same reference numerals throughout the disclosure.

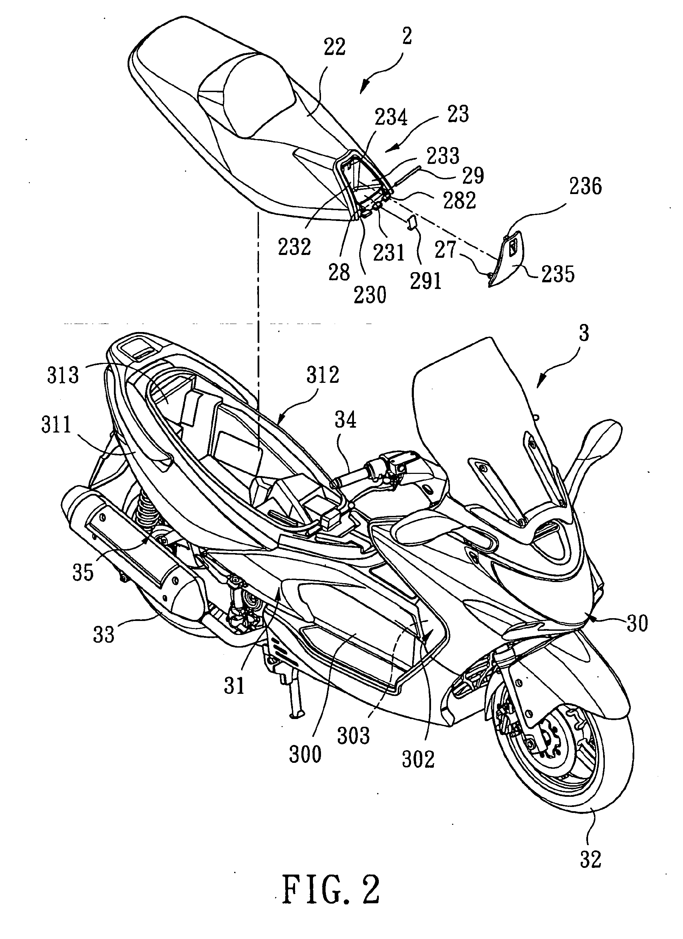

Referring to Figure 2, the first preferred embodiment of a saddle 2 according to this invention is adapted for use in a scooter-type motorcycle 3 . The motorcycle 3 includes a front fork assembly 30, a frame body 31, front and rear wheels 32, 33 opposite to each other in a longitudinal direction, a footboard 300 interposed between the front and rear wheels 32, 33, a handlebar assembly 34 for controlling the front wheel 32, and a driving device 35 accommodated within the frame body 31. The frame body 31 includes a chassis (not shown), a shell 311 covering the chassis, and a large storage compartment 312 having a large storage space 313. The front fork assembly 30 has a glove compartment 302 with a small storage space 303. The driving device 35 includes such known components as an engine unit, an ignition unit, a transmission unit, a cooling unit, etc. , which are not illustrated or discussed herein since they are not pertinent to the claimed invention. The saddle 2 has a bottom portion with a front end pivoted to a top edge of the large storage compartment 312, and is lockable to close the large storage space 313, as is known in the art. When the saddle 2 is in the locked state, access to the large storage space 313 is denied. When the saddle 2 is unlocked and is lifted, access to the large storage space 313 is permitted.

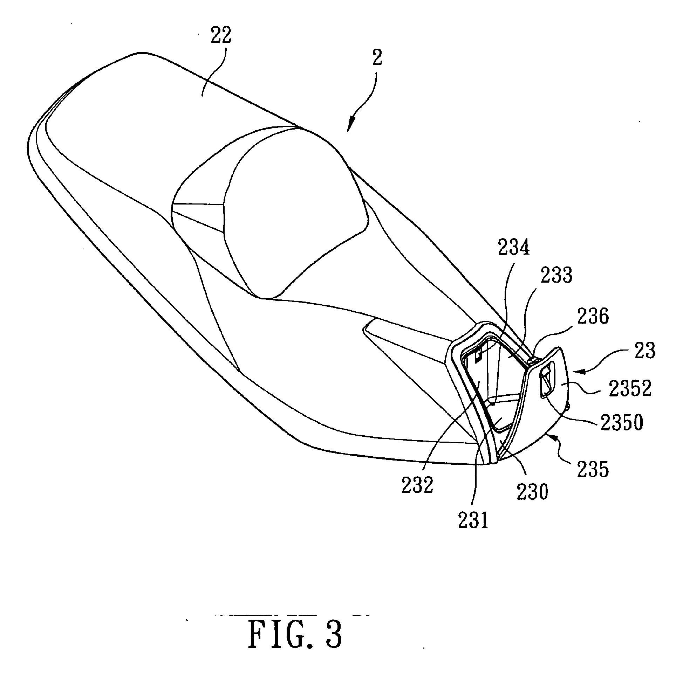

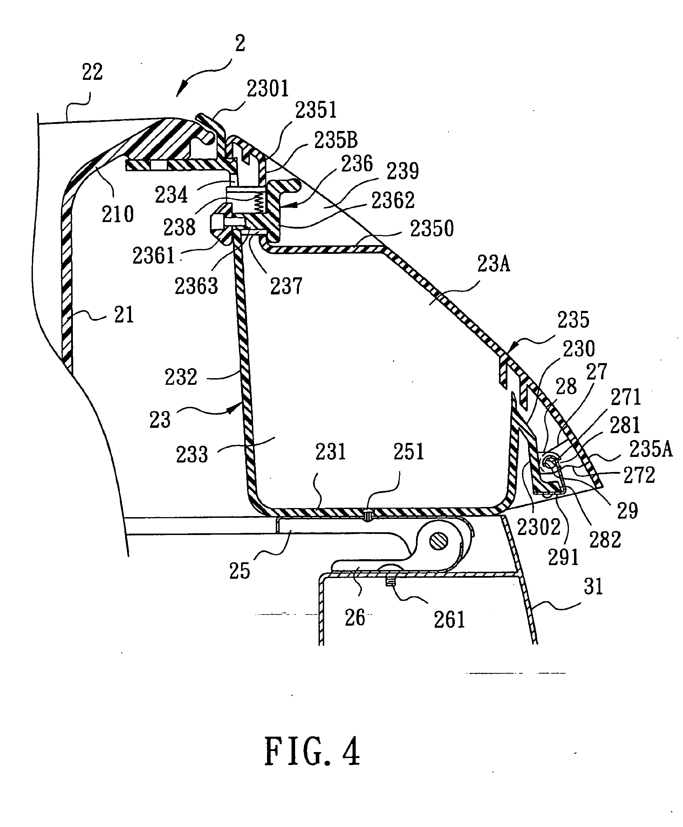

Referring further to Figures 3 and 4, the saddle 2 of this invention is shown to include a saddle shell 21, a seat cushion 22, a receptacle 23, left and right mounts 28, a lid member 235, a pivot shaft 29, and a leaf spring 291. The saddle shell 21 is formed from a relatively rigid plastic material, and includes a seat mounting portion 210 adapted to be disposed spacedly from the footboard 300 in an upright direction.

The receptacle 23 is primarily formed from a relatively rigid plastic material, and includes a front wall 230 and a rear wall 232. The front wall 230 has an end portion 2301 secured to the seat mounting portion 210, extends towards the footboard 300 to terminate at a lower mount region 2302, and has an access opening (23A) extending between the seat mounting portion 210 and the lower mount region 2302. The rear wall 232 is spaced apart from the front wall 230, and is exposed to the access opening (23A). The rear wall 232 extends in the upright direction and toward the footboard 300, and terminates at a lower joining edge. The access opening (23A) extends downwardly to terminate at a bottom wall 231 that is integrally formed with the lower joining edge so as to define an accommodation chamber 233 in cooperation with the rear wall 232. The rear wall 232 has upper and lower inner wall edges spaced apart from each other in the upright direction to define a locking slot 234 therebetween.

The seat cushion 22 is mounted on the saddle shell 21 to cover a top side of the saddle shell 21 for sitting by a rider thereon. The seat cushion 22 is generally formed from a relatively soft foamed plastic material.

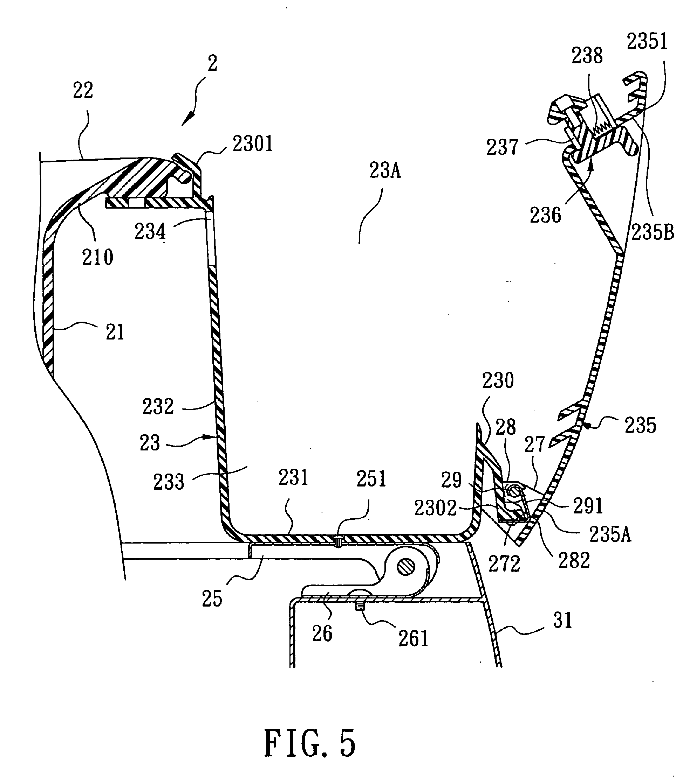

Referring to Figures 4 and 5, a coupling seat 25 is disposed below the bottom wall 231. The bottom wall 231 is secured to the coupling seat 25 by means of a plurality of retaining hooks 251. The coupling seat 25 has a front end pivoted to a connecting seat 26, which is secured to the frame body 31 by means of a threaded member 261. By means of the coupling seat 25 which is pivoted to the connecting seat 26, the entire saddle 2 is rotatable relative to the frame body 31 to control access to the large compartment space 313.

The left and right mounts 28 are disposed on the lower mount region 2302, and are spaced apart from each other in a transverse direction relative to both the longitudinal and upright directions. The lid member 235 includes pivoted and anchoring regions (235A), (235B) opposite to each other.

The pivot shaft 29 is disposed on the pivoted region (235A) of the lid member 235, and has left and right journal ends that are journalled respectively on the left and right mounts 28 about a pivot axis such that the lid member 235 is turnable about the pivot axis between an opened position (see Figure 5) where the anchoring region (235B) is remote from the rear wall 232 to expose the access opening (23A), and a closed position (see Figure 4) where the anchoring region (235B) is closer to the rear wall 232 to cover the access opening (23A). The left and right mounts 28 have left and right annular bearing surfaces, respectively, which surround the pivot axis and which journal the left and right journal ends, respectively. The left and right mounts 28 further have left and right inserting cavities 281, respectively, which confront the pivoted region (235A) when the lid member 235 is in the closed position, and which extend radially to be communicated with the left and right annular bearing surfaces, respectively, so as to permit the left and right journal ends of the pivot shaft 29 to be inserted thereinto in the longitudinal direction.

The leaf spring 291 has a connecting end secured to the lower mount region 2302, and a tongue end which is configured such that the tongue end is kept in frictional engagement with the pivot shaft 29 when the lid member 235 is turned about the pivot axis between the opened and closed positions, thereby preventing slippage of the pivot shaft 29 through the inserting cavities 281 of the left and right mounts 28.

The pivoted region (235A) has left and right tabs 27 (only one is shown). Each of the tabs 27 has a through hole 271 and a lower edge formed with a stop portion 272. When the lid member 235 is in the closed position, the left and right mounts 28 are interposed between the left and right tabs 27. The pivot shaft 29 extends through the through holes 271 in the tabs 27, and is fitted into the inserting cavities 281 of the left and right mounts 28 such that the lid member 235 is turnable between the opened and closed positions. The lower mount region 2302 has a stop member 282 extending therefrom and disposed below the left and right mounts 28 such that when the lid member 235 is turned to the opened position (see Figure 5), the stop portions 272 of the tabs 27 abut against the stop member 282, thereby restricting the turning angle of the lid member 235. When the lid member 235 is in the closed position, the stop portions 272 are distal from the stop member 282. In this embodiment, the stop member 282 is in the form of three protrusions. The left and right protrusions are disposed below the left and right mounts 28. The connecting end of the leaf spring 291 is secured to a lower end face of the middle protrusion.

Furthermore, the anchoring region (235B) of the lid member 235 has a mounting segment 2351 distal from the pivoted region (235A). The mounting segment 2351 extends in the upright direction when the lid member 235 is in the closed position, and has inner mounting and abutment edges spaced apart from each other to define a mounting slot 237. Moreover, the anchoring region (235B) includes a shielding segment 2350 extending to interconnect the inner abutment edge and the pivoted region (235A) so as to shield the accommodation chamber 233. In addition, the lid member 235 further includes a faceplate portion 2352 which is integrally formed with the pivoted region (235A), which extends from the pivoted region (235A) toward the seat mounting portion 210, and which is disposed forwardly of, and which is spaced apart from, the mounting segment 2351.

The saddle 2 further includes a latch member 236, which has an arresting end 2361 and an actuated end 2362 opposite to each other, and a biased segment 2363 interposed between the arresting end 2361 and the actuated end 2362. The latch member 236 is movable in the mounting slot 237 in the upright direction between an arrested position (see Figure 4) where the arresting end 2361 engages the lower inner wall edge, and a released position where the arresting end 2361 is disposed proximate to the upper inner wall edge so as to be movable outwardly of the locking slot 234, as shown in Figure 5. In the arrested position, the arresting end 2361 extends behind the lower inner wall edge. A biasing member 238, preferably a spring, has two ends respectively secured to the innermounting edge of the mounting segment 2351 and the biased segment 2363, and is disposed to bias the latch member 236 towards the arrested position. The faceplate portion 2352 is formed with an access 239 for manual operation of the actuated end 2362.

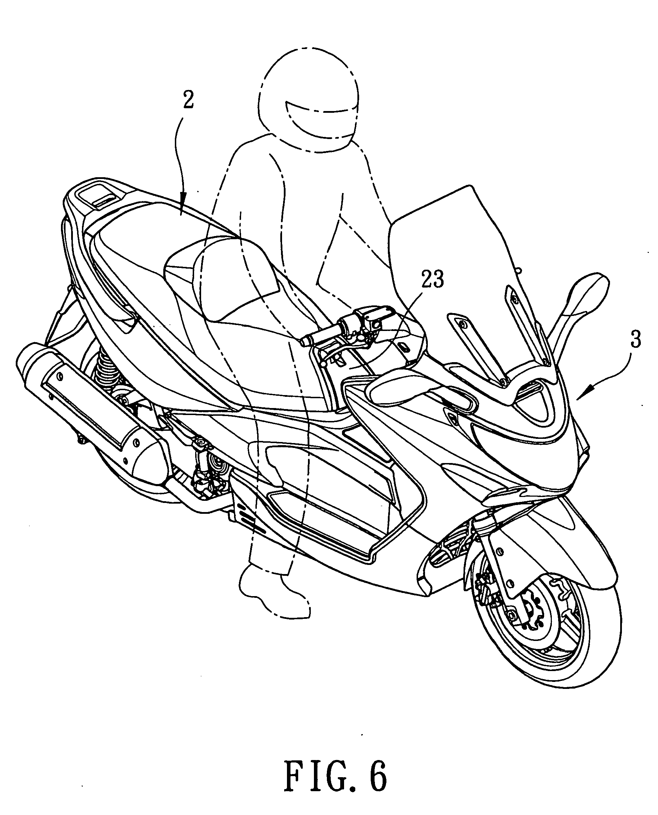

Referring further to Figure 6, if the rider wants to take out an article, such as a pack of facial tissue paper, from the accommodation chamber 233 during a ride, he can stop his motorcycle 3 by the roadside with the engine still running, and he can remain seated while he unlocks the lid member 235 by pulling the actuated end 2362, which is accessible via the access 239, upwardly and then outwardly to cause the arresting end 236.1 to disengage from the lower inner wall edge and to move outwardly of the locking slot 234 . Afterwards, the rider can close the lid member 235 by pulling the actuated end 2362 upwardly and cause the arresting end 2361 to extend through the locking slot 234. When the actuated end 2362 is released, the arresting end 2361 will engage the lower inner wall edge by virtue of the biasing force of the biasing member 238.

As illustrated, the saddle 2 of this invention is provided with the accommodation chamber 233 for easy storage of small articles therein, and enables the rider to store/retrieve articles in/from the accommodation chamber 233 located at the front end of the saddle 2 without the need to stop the engine for removal of the ignition key and without the need to dismount the motorcycle 3. Moreover, with the arrangement of the leaf spring 291 that is kept in frictional engagement with the pivot shaft 29, disengagement of the pivot shaft 29 from the left and right mounts 28 can be prevented to thereby prevent detachment of the lid member 235. Furthermore, the bottom wall 231 of the receptacle 23 can be easily secured to the coupling seat 25 by means of the retaining hooks 251. Thus, the problems associated with the aforementioned prior art are eliminated.

Referring to Figure 6, the second preferred embodiment of a saddle 2 of this invention differs from the first preferred embodiment in that the saddle 2 further includes a drink holding member 24, which is in the form of a ring. The rear wall 232 of the receptacle 23 has a forward surface facing the lid member 235. The drink holding member 24 is mounted pivotally on the forward surface of the rear wall 232, and is swingable relative to the rear wall 232 between a use position where the drink holding member 24 is substantially perpendicular to the rear wall 232, and a storage position where the drink holding member 24 rests against the forward surface of the rear wall 232.

## Claims

1. A saddle (2) for a scooter-type motorcycle (3) which has front and rear wheels (32, 33) opposite to each other in a longitudinal direction, and a footboard (300) interposed therebetween, said saddle (2) comprising
a saddle shell (21) including a seat mounting portion (210) adapted to be spacedly disposed from the footboard (300) in an upright direction;
a receptacle (23) including a front wall (230) which has an end portion (2301) secured to said seat mounting portion (210), which extends towards the footboard (300) to terminate at a lower mount region (2302) , and which has an access opening (23A) extending between said seat mounting portion (210) and said lower mount region (2302), and a rear wall (232) which is spaced apart from said front wall (230), said rear wall (232) extending in the upright direction and toward the footboard (300) and terminating at a lower joiningedge, said access opening (23A) extending downwardly to terminate at a bottomwall (231) that is integrally formed with said lower joining edge so as to define an accommodation chamber (233) in cooperation with said rear wall (232);
left and right mounts (28) which are disposed on said lower mount region (2302) , and which are spaced apart from each other in a transverse direction relative to both the longitudinal and upright directions ;
and a lid member (235) said saddle being **characterized by** said rear wall (232) being exposed to said access opening (23A), and said lid member (235) including pivoted and anchoring regions (235A, 235B) opposite to each other;
a pivot shaft (29) which is disposed on said pivoted region (235A) , and which has left and right journal ends that are journalled respectively on said left and right mounts (28) about a pivot axis such that said lid member (235) is turnable about the pivot axis between an opened position where said anchoring region (235B) is remote from said rear wall (232) to expose said access opening (23A), and a closed position where said anchoring region (235B) is closer to said rear wall (232) to cover said access opening (23A); and
a leaf spring (291) having a connecting end secured to said lower mount region (2302), and a tongue end which is configured such that said tongue end is kept in frictional engagement with said pivot shaft (29) when said lid member (235) is turned about the pivot axis between the opened and closed positions.

2. A saddle (2) according to Claim 1, **characterized in that** said left and right mounts (28) have left and right annular bearing surfaces, respectively, which surround the pivot axis and which journal said left and right journal ends, respectively.

3. A saddle (2) according to Claim 2, further **characterized in that** said left and right mounts (28) further have left and right inserting cavities (281), respectively, which confront said pivoted region (235A) when said lid member (235) is in the closed position, and which extend radially to be communicated with said left and right annular bearing surfaces, respectively, so as to permit said left and right journal ends of said pivot shaft (29) to be inserted thereinto in the longitudinal direction.

4. A saddle (2) according to Claim 3, further **characterized in that** said pivoted region (235A) has left and right tabs (27), each of said tabs (27) having a through hole (271) and a lower edge formed with a stop portion (272), said pivot shaft (29) extending through said through holes (271) in said left and right tabs (27) and being fitted into said inserting cavities (281) of said left and right mounts (28) such that said lid member (235) is turnable between the opened and closed positions.

5. A saddle (2) according to Claim 4, further **characterized in that** said lower mount region (2302) has a stop member (282) extending integrally therefrom and disposed below said left and right mounts (28) such that when said lid member (235) is turned to the opened position, said stop portions (272) of said tabs (27) abut against said stop member (282) , thereby restricting the turning angle of said lid member (235).

6. A saddle (2) according to Claim 1, further **characterized by** a connecting seat (26) which is adapted to be secured to a frame body (31) of the motorcycle (3) , and a coupling seat (25) disposed below said bottom wall (231) and having a front end pivoted to said connecting seat (26) , said bottom wall (231) of said receptacle (23) being secured to said coupling seat (25) by means of a plurality of retaining hooks (251) such that said saddle (2) is rotatable relative to the frame body (31).

7. A saddle (2) according to Claim 1, **characterized in that:**
said rear wall (232) has upper and lower inner wall edges spaced apart from each other in the upright direction to define a locking slot (234) therebetween;
said anchoring region (235B) has amounting segment (2351) distal from said pivoted region (235A) and extending in the upright direction when said lid member (235) is placed in the closed position, said mounting segment (2351) having inner mounting and abutment edges spaced apart from each other to define a mounting slot (237); and
said saddle (2) is further **characterized by**: a latch member (236) which has an arresting end (2361) and an actuated end (2362) opposite to each other, and a biased segment (2363) interposed between said arresting end (2361) and said actuated end (2362), said latch member (236) being movable in said mounting slot (237) in the upright direction between an arrested position where said arresting end (2361) engages said lower inner wall edge, and a released position where said arresting end (2361) is disposed proximate to said upper inner wall edge so as to be movable outwardly of said locking slot (234); and a biasing member (238) disposed to bias said latch member (236) towards the arrested position.

8. A saddle (2) according to Claim 7, further **characterized in that** said anchoring region (235B) includes a shielding segment (2350) extending to interconnect said inner abutment edge and said pivoted region (235A) so as to shield said accommodation chamber (233).

9. A saddle (2) according to Claim 8, **characterized in that** said lid member (235) further includes a faceplate portion (2352) which is integrally formed with said pivoted region (235A) , whichextends fromsaidpivotedregion (235A) toward said seat mounting portion (210), and which is disposed forwardly of, and which is spaced apart from, said mounting segment (2351) , said faceplate portion (2352) being formed with an access (239) for manual operation of said actuated end (2362).

10. A saddle (2) according to Claim 1, further **characterized by** a drink holding member (24), said rear wall (232) having a forward surface facing said lid member (235) , said drink holding member (24) being mounted pivotally on said forward surface of said rear wall (232) and being swingable relative to said rear wall (232) between a use position where said drink holding member (24) is substantially perpendicular to said rear wall (232) , and a storage position where said drinkholdingmember (24) rests against said forward surface of said rear wall (232).

## Patentansprüche

1. Eine Sitzbank (2) für ein Roller-Typmotorrad (3), welches Vorder- und Hinterräder (32, 33) hat, gegenüber zueinander in einer Längsrichtung und ein Fußbrett (300), das dazwischen eingefügt ist, wobei die Sitzbank (2) aufweist
eine Sitzbankschale (21), die einen Sitzmontageteil (210) enthält, der daran angepasst ist, beabstandet vom Fußbrett (300) in einer senkrechten Richtung angeordnet zu werden;
eine Aufnahme (23), welche eine Vorderwand (230) enthält, welche einen Endteil (2301) hat, der am Sitzmontageteil (210) gesichert ist, welcher sich in Richtung des Fußbrettes (300) erstreckt, um in einem unteren Montagebereich (2302) zu enden, und welcher eine Zugangsöffnung (23A) hat, welche sich zwischen dem Sitzmontageteil (210) und dem unteren Montagebereich (2302) erstreckt und eine Rückwand (232), welche von der Vorderwand (230) beabstandet ist, wobei sich die Rückwand (232) in der senkrechten Richtung und in Richtung des Fußbrettes (300) erstreckt und an einer unteren Verbindungskante endet, wobei die Zugangsöffnung (23A) sich nach unten erstreckt, um in einer Bodenwand (231) zu enden, welche integral mit der unteren Verbindungskante gebildet ist, so dass sie eine Aufnahmekammer (232) in Zusammenarbeit mit der Rückwand (232) bildet;
linke und rechte (28) Anbringungen, welche auf dem unteren Montagebereich (2303) angeordnet sind und welche voneinander in einer Querrichtung relativ zu sowohl den Längs- als auch den senkrechten Richtungen beabstandet sind;
und ein Klappenbauteil (235), wobei die Sitzbank **dadurch gekennzeichnet ist, dass** die Rückwand (232) zur Zugangsöffnung (23A) exponiert ist, und das Klappenbauteil (235) angelegte und verankernde Bereiche (235A, 235B) gegenüber zueinander enthält;
einen Schwenkschaft (29), welcher auf dem angelegten Bereich (235A) angeordnet ist und welcher linke und rechte Zapfenenden hat, die jeweils auf den linken und rechten Anbringungen (28) um eine Schwenkachse verzapft sind, so dass das Klappenbauteil (235) um die Schwenkachse drehbar ist, zwischen einer geöffneten Position, in welcher der Verankerungsbereich (235B) von der Rückwand (235) entfernt ist, um die Zugangsöffnung (23A) freizulegen und einer geschlossenen Position, in welcher der Verankerungsbereich (235B) näher an der Rückwand (232) ist, um die Zugangsöffnung (23A) abzudecken; und
eine Blattfeder (291) mit einem Verbindungsende hat, das am unteren Montagebereich (2302) gesichert ist und ein Zungenende, welches so konfiguriert ist, dass dieses Zungenende in Reibungserfassung mit dem Schwenkschaft (29) gehalten wird, wenn das Klappenbauteil (235) um die Schwenkachse zwischen den geöffneten und geschlossenen Positionen gedreht wird.

2. Eine Sitzbank (2) nach Anspruch 1 **dadurch gekennzeichnet, dass** die linken und rechten Anbringungen (28) jeweils linke und rechte ringförmige Lageroberflächen haben, welche die Schwenkachse umgeben und welche jeweils die linken und rechten Zapfenenden verzapft.

3. Eine Sitzbank (2) nach Anspruch 2 weiter **dadurch gekennzeichnet, dass** die linken und rechten Anbringungen (28) ferner jeweils linke und rechte Einfügungsvertiefungen haben, welche dem Schwenkbereich (235A) gegenüberliegen, wenn das Klappenbauteil (235) sich in der geschlossenen Position befindet und welche sich radial erstrecken, um jeweils mit den linken und rechten ringförmigen Lageroberflächen kommuniziert zu werden, um es den linken und rechten Zapfenenden des Schwenkschaftes (29) zu gestatten, in sie in Längsrichtung eingesetzt zu werden.

4. Eine Sitzbank (2) nach Anspruch 3 ferner **dadurch gekennzeichnet, dass** der Schwenkbereich (235A) linke und rechte Fortsätze (27) hat, wobei jeder der Fortsätze (27) ein Durchgangsloch (271) hat und eine Unterkante, die mit einem Stoppteil (272) gebildet wird, wobei der Schwenkschaft (29) sich durch die Durchgangslöcher (271) in den linken und rechten Fortsätzen (27) erstreckt, und in die Einfügungsvertiefungen (281) der linken und rechten Anbringungen (28) so eingepasst wird, dass das Klappenbauteil (235) zwischen den geöffneten und geschlossenen Positionen drehbar ist.

5. Eine Sitzbank (2) nach Anspruch 4 ferner **gekennzeichnet dadurch, dass** der untere Montagebereich (2302) ein Stoppbauteil (282) hat, dass sich integral davon erstreckt und unterhalb der linken und rechten Anbringungen (28) derartig angeordnet ist, dass, wenn das Klappenbauteil (235) in die geöffnete Position gedreht wird, die Stoppteile (272) der Fortsätze (27) gegen das Stoppbauteil (282) anstoßen, wodurch der Drehwinkel des Klappenbauteils (235) beschränkt wird.

6. Eine Sitzbank (2) nach Anspruch 1 ferner **gekennzeichnet durch** einen Verbindungssitz (26), welcher daran angepasst ist, auf einem Rahmenkörper (31) des Motorrades (3) gesichert zu werden und einen Kopplungssitz (25), der unterhalb der Bodenwand (231) angeordnet ist, und ein Vorderende hat, das an dem Verbindungssitz (26) angelenkt ist, wobei die Bodenwand (231) der Aufnahme (23) an dem Kopplungssitz (25) mittels einer Vielzahl von Rückhaltehaken (251) gesichert ist, so dass die Sitzbank (2) relativ zum Rahmenkörper (31) drehbar ist.

7. Eine Sitzbank (2) nach Anspruch 1 **dadurch gekennzeichnet, dass** die Rückwand (232) obere und untere innere Wandkanten hat, die voneinander in der senkrechten Richtung beabstandet sind, um einen Verriegelungsschlitz (234) dazwischen vorzugeben;
der Ankerbereich (235B) ein Montageabschnitt (2351) hat, das vom Schwenkbereich (235A) entfernt ist und sich in der senkrechten Richtung erstreckt, wenn das Klappenbauteil (235) in der geschlossenen Position platziert ist, wobei der Montageabschnitt (2351) innere Montagestoßkanten besitzt, die voneinander beabstandet sind, um einen Montageschlitz (237) vorzugeben; und
die Sitzbank (2) ferner **gekennzeichnet ist durch**: ein Klinkenbauteil (236), welches ein Arretierungsende (2361) besitzt und ein betätigtes Ende (2362), die einander gegenüber liegen, und ein vorgespanntes Segment (2363), das zwischen dem Arretierungsende (2361) und dem betätigten Ende (2362) zwischengefügt ist, wobei das Klinkenbauteil (236) beweglich in dem Montageschlitz (237) ist, in der senkrechten Richtung zwischen einer verriegelten Position, in der das Verriegelungsende (2361) die untere innere Wandkante erfasst und einer freigegebenen Position, in der das Verriegelungsende (2361) in der Nähe der oberen inneren Wandkante angeordnet ist, um nach außen aus dem Verriegelungsschlitz (234) bewegbar zu sein; und
ein Vorspannungsbauteil (238), das angeordnet ist, um das Klinkenbauteil (236) in Richtung der verriegelten Position vorzuspannen.

8. Eine Sitzbank (2) nach Anspruch 7 ferner **gekennzeichnet dadurch, dass** der Verankerungsbereich (235B) ein Schirmsegment (2350) besitzt, das sich erstreckt, um die innere Stoßkante und den Schwenkbereich (235A) zu verbinden, um die Aufnahmekammer (233) abzuschirmen.

9. Eine Sitzbank (2) nach Anspruch 8 **dadurch gekennzeichnet, dass** das Klappenbauteil (235) ferner einen Stirnplattenteil (2352) enthält, welcher integral mit dem Schwenkbereich (235A) gebildet wird, welcher sich von dem Schwenkbereich (235A) in Richtung des Sitzmontageteils (210) erstreckt und welcher nach vorne von und voneinander beabstandet von dem Montagesegment (2351) angeordnet ist, wobei der Stirnplattenteil (2352) mit einem Zugang (239) zur manuellen Betätigung des betätigten Endes (2362) gebildet wird.

10. Eine Sitzbank (2) nach Anspruch 1 ferner **gekennzeichnet durch** ein Getränkehalterbauteil (24), wobei die Rückwand (232) eine vordere Oberfläche hat, die dem Klappenbauteil (235) gegenüber liegt, das Getränkehalterbauteil (24) schwenkbar auf der vorderen Oberfläche der Rückwand (232) montiert ist und schwenkbar relativ zur Rückwand (232) ist, zwischen einer Verwendungsposition, in der das Getränkehalterbauteil (24) im Wesentlichen senkrecht zur Rückwand (232) liegt und einer Speicherposition, in der das Getränkehalterbauteil (24) gegen die vordere Oberfläche der Rückwand (232) ruht.

## Revendications

1. Selle (2) pour motocyclette de type scooter (3) qui a des roues avant et arrière (32, 33) opposées l'une à l'autre dans un sens longitudinal et un repose-pieds (300) interposé entre elles, ladite selle (2) comprenant :
- une coque de selle (21) comprenant une partie de montage de siège (210) conçue pour être placée de manière espacée vers le haut par rapport au repose-pieds (300) ;
- un réceptacle (23) comprenant une paroi avant (230) qui présente une extrémité (2301) fixée à ladite partie de montage de siège (210), qui s'étend vers le repose-pieds (300) pour se terminer par une zone de montage inférieure (2302), et qui comporte une ouverture d'accès (23A) s'étendant entre ladite partie de montage de siège (210) et ladite zone de montage inférieure (2302), et une paroi arrière (232) qui est éloignée de ladite paroi avant (230), ladite paroi arrière (232) s'étendant vers le haut et vers le repose-pieds (300) et se terminant par un bord de jonction inférieur, ladite ouverture d'accès (23A) s'étendant vers le bas pour se terminer par une paroi inférieure (231) qui est formée de façon solidaire avec ledit bord de jonction inférieur pour définir un compartiment de rangement (233) en coopération avec ladite paroi arrière (232) ;
- des fixations gauche et droite (28) qui sont placées sur ladite zone de montage inférieure (2302), et qui sont éloignées l'une de l'autre dans un sens transversal par rapport à la fois au sens longitudinal et au sens vertical ;
- et un élément de couvercle (235), ladite selle étant **caractérisée en ce que** ladite paroi arrière (232) est visible par ladite ouverture d'accès (23A) et **en ce que** ledit élément de couvercle (235) comprend des zones d'articulation et d'ancrage (235A, 235B) opposées l'une à l'autre ;
- un arbre pivot (29) qui est placé sur ladite zone de pivotement (235A) et qui possède des tourillons d'extrémité gauche et droit qui sont respectivement supportés de façon à pouvoir tourner sur lesdites fixations gauche et droite (28) autour d'un axe de pivotement de sorte que ledit élément de couvercle (235) peut tourner autour de l'axe de pivotement entre une position ouverte dans laquelle ladite zone d'ancrage (235B) est éloignée de ladite paroi arrière (232) pour laisser apparaître ladite ouverture d'accès (23A) et une position fermée dans laquelle ladite zone d'ancrage (235B) est plus proche de ladite paroi arrière (232) pour couvrir ladite ouverture d'accès (23A) ; et
- un ressort à lame (291) présentant une extrémité de liaison fixée à ladite zone de montage inférieure (2302), et une extrémité de languette qui est conçue de sorte que ladite extrémité de languette est maintenue en prise par friction avec ledit arbre pivot (29) lorsque ledit élément de couvercle (235) tourne autour de l'axe de pivotement entre les positions ouverte et fermée.

2. Selle (2) selon la revendication 1, **caractérisée en ce que** lesdites fixations gauche et droite (28) ont respectivement des surfaces d'appui annulaires gauche et droite qui entourent l'axe de pivotement et qui supportent respectivement de manière à pouvoir pivoter lesdits tourillons d'extrémité gauche et droit.

3. Selle (2) selon la revendication 2, **caractérisée en outre en ce que** lesdites fixations gauche et droite (28) comportent également respectivement des cavités d'insertion gauche et droite (281) qui sont en vis-à-vis avec ladite zone de pivotement (235A) lorsque ledit élément de couvercle (235) est en position fermée, et qui s'étendent radialement pour communiquer respectivement avec lesdites surfaces d'appui annulaires gauche et droite, pour permettre auxdits tourillons d'extrémité gauche et droit dudit arbre pivot (29) d'être insérés à l'intérieur de celles-ci dans le sens longitudinal.

4. Selle (2) selon la revendication 3, **caractérisée en outre en ce que** ladite zone de pivotement (235A) possède des ergots gauche et droit (27), chacun desdits ergots (27) ayant un trou traversant (271) et un bord inférieur formé avec une partie d'arrêt (272), ledit arbre pivot (29) traversant lesdits trous traversants (271) dans lesdits ergots gauche et droit (27) et étant inséré dans lesdites cavités d'insertion (281) desdites fixations gauche et droite (28) de sorte que ledit élément de couvercle (235) peut tourner entre les positions ouverte et fermée.

5. Selle (2) selon la revendication 4, **caractérisée en outre en ce que** ladite zone de montage inférieure (2302) comprend un élément d'arrêt (282) s'étendant de manière solidaire à partir de celle-ci et placé en dessous desdites fixations gauche et droite (28) de sorte que lorsque ledit élément de couvercle (235) est tourné vers la position ouverte, lesdites parties d'arrêt (272) desdits ergots (27) viennent en butée contre ledit élément d'arrêt (282), limitant ainsi l'angle de rotation dudit élément de couvercle (235).

6. Selle (2) selon la revendication 1, **caractérisée en outre par** un siège de liaison (26) qui est conçu pour être fixé à un cadre (31) de la motocyclette (3) et un siège de couplage (25) placé en dessous de ladite paroi inférieure (231) et ayant une extrémité avant pivotante par rapport audit siège de liaison (26), ladite paroi inférieure (231) dudit réceptacle (23) étant fixée audit siège de couplage (25) au moyen d'une pluralité de crochets de retenue (251) de sorte que ladite selle (2) peut tourner par rapport au cadre (31).

7. Selle (2) selon la revendication 1, **caractérisée en ce que** :
- ladite paroi arrière (232) a des bords de paroi interne supérieur et inférieur éloignés l'un de l'autre vers le haut pour définir une fente de verrouillage (234) entre eux ;
- ladite zone d'ancrage (235B) présente un segment de montage (2351) distal par rapport à ladite zone de pivotement (235A) et s'étendant vers le haut lorsque ledit élément de couvercle (235) est placé en position fermée, ledit segment de montage (2351) ayant des bords d'appui et de montage internes éloignés l'un de l'autre pour définir une fente de montage (237) ; et
- ladite selle (2) est **caractérisée en outre par** : un élément de loquet (236) qui comprend une extrémité d'arrêt (2361) et une extrémité actionnée (2362) opposées l'une à l'autre, et un segment sollicité (2363) interposé entre ladite extrémité d'arrêt (2361) et ladite extrémité actionnée (2362), ledit élément de loquet (236) étant mobile dans ladite fente de montage (237) vers le haut entre une position arrêtée dans laquelle ladite extrémité d'arrêt (2361) vient en prise dans ledit bord de paroi interne inférieur, et une position libre dans laquelle ladite extrémité d'arrêt (2361) est placée à proximité dudit bord de paroi interne supérieur pour être mobile vers l'extérieur de ladite fente de verrouillage (234) ; et un élément de sollicitation (238) positionné pour solliciter ledit élément de loquet (236) vers la position arrêtée.

8. Selle (2) selon la revendication 7, **caractérisée en outre en ce que** ladite zone d'ancrage (235B) comprend un segment de protection (2350) s'étendant pour relier entre eux ledit bord d'appui interne et ladite zone de pivotement (235A) pour protéger ledit compartiment de rangement (233).

9. Selle (2) selon la revendication 8, **caractérisée en ce que** ledit élément de couvercle (235) comprend en outre une partie de façade (2352) qui est formée de manière solidaire avec ladite zone de pivotement (235A), qui s'étend de ladite zone de pivotement (235A) vers ladite partie de montage de siège (210), et qui est placée vers l'avant et éloignée dudit segment de montage (2351), ladite partie de façade (2352) étant formée avec un accès (239) pour permettre la mise oeuvre manuelle de ladite extrémité actionnée (2362).

10. Selle (2) selon la revendication 1, **caractérisée en outre par** un élément de support de boisson (24), ladite paroi arrière (232) ayant une surface avant en regard dudit élément de couvercle (235), ledit élément de support de boisson (24) étant monté de façon à pouvoir pivoter sur ladite surface avant de ladite paroi arrière (232) et pouvant basculer par rapport à ladite paroi arrière (232) entre une position d'utilisation dans laquelle ledit élément de support de boisson (24) est essentiellement perpendiculaire à ladite paroi arrière (232), et une position de rangement dans laquelle ledit élément de support de boisson (24) repose contre ladite surface avant de ladite paroi arrière (232).
